# EUROPEAN PATENT SPECIFICATION

(11) **EP 2 634 445 B1**
(45) Date of publication and mention of the grant of the patent: **08.04.2015**
(21) Application number: 13167576.1
(22) Date of filing: 29.10.2008
(51) Int. Cl.: F16D 43/18

(54) **Centrifugal clutch**
Zentrifugalkupplung
Embrayage centrifuge

(43) Date of publication of application: 04.09.2013
(62) Divisional of application: 08875242.3
(73) Proprietor: BRP-Powertrain GmbH & Co. KG, 4623 Gunskirchen (AT)
(72) Inventor: Korenjak, Norbert, 4651 Stadl-Paura (AT)
(74) Representative: Cabinet Plasseraud

(56) References cited:
- EP-A1- 0 430 855
- DE-A1- 2 516 852
- FR-A1- 2 303 196
- US-A- 1 805 357
- US-A- 4 960 194
- US-B1- 6 250 449

## Description

### FIELD OF THE INVENTION

The present invention relates to a centrifugal clutch for engines and more specifically to a monoblock centrifugal clutch and a method of manufacturing the same.

### BACKGROUND OF THE INVENTION

Document DE2516852 discloses a centrifugal clutch according to the preamble of claim 1.

Centrifugal clutches are widely used for providing a driving connection between the crankshaft of a small internal combustion engine and a rotary driven member. For example, centrifugal clutches are used in hand-held power tools such as chain saws, in scooters, and in small racing karts. The centrifugal clutch is disengaged when the engine is running at idle speed such that the rotary driven member does not rotate at engine idle. When the engine speed is increased to a predetermined speed, the centrifugal clutch engages to drive the rotary driven member.

A centrifugal clutch typically includes an outer drum and a rotor inside the drum. The rotor constitutes the driving member and is connected to the engine while the drum is the driven member and is connected to the rotating device i.e. sprocket and chain, drive shaft and wheels, etc.

There are generally two types of centrifugal clutches for small engines: centrifugal clutches with separate centrifugal weights and springs for maintaining the weights out of engagement with the clutch drum; and centrifugal clutches with centrifugal weights integral with the body of the clutch (i.e. monoblock centrifugal clutches).

In a centrifugal clutch with separate centrifugal weights and springs, when the engine speed is increased, the centrifugal force of the centrifugal weights comes to exceed the resilience of the springs so that the centrifugal weights are radially moved outwards and frictionally engage the clutch drum.

In a centrifugal clutch with integral centrifugal weights, the rotor inside the drum is a disk or a series of stacked disks with cut-away portions defining two or more centrifugal weights whereby an increase in the engine speed generates a corresponding centrifugal force of the centrifugal weights which eventually bend the centrifugal weights outward until they frictionally engage the clutch drum.

For both types of centrifugal clutches, the clearance between the centrifugal weights and the clutch drum determines the engine speed at which the centrifugal weights engage the drum and allows the engine to reach sufficiently high speed (and therefore power) before the clutch engages. Typically the clutch engagement starts at 3,000 rpm. In monoblock centrifugal clutches, at 3,000 rpm only a small portion of the centrifugal weights touch the clutch drum and the torque transmitted is small. As a result, the clutch may slip over a wide range, typically between 3,000 and 7,000 rpm.

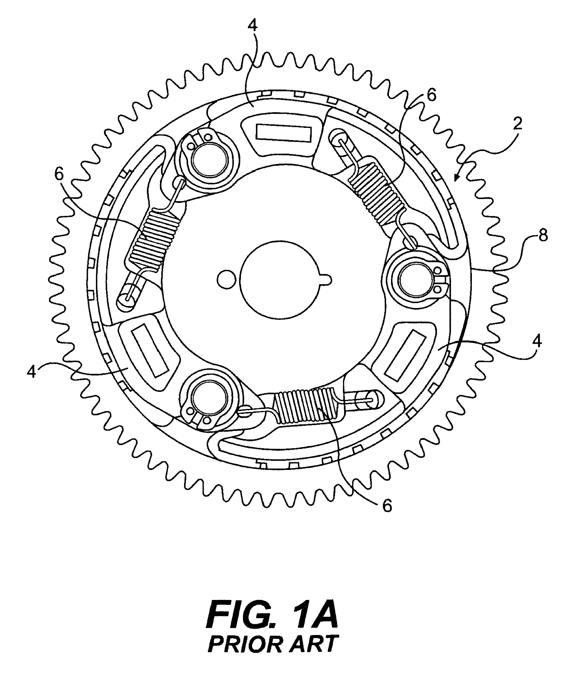

Fig. 1A illustrates a centrifugal clutch 2 with separate centrifugal weights 4 and springs 6 disposed inside a clutch drum 8. Centrifugal clutches, such as the clutch 2, are generally heavier and include more parts, adding manufacturing and assembly costs as compared with the centrifugal clutches with integral centrifugal weights. However, centrifugal clutches with separate centrifugal weights and springs generally have a smaller slipping range compared with the centrifugal clutches with integral centrifugal weights. The slipping range is the engine speed range in which the inside rotor of the clutch and the drum are slipping and only a portion of the engine torque is transferred. The springs 6 are chosen such that displacement of the centrifugal weights begins at higher engine speeds, thereby allowing smaller clearance between the centrifugal weights 4 and the drum 8 and reducing the slipping range.

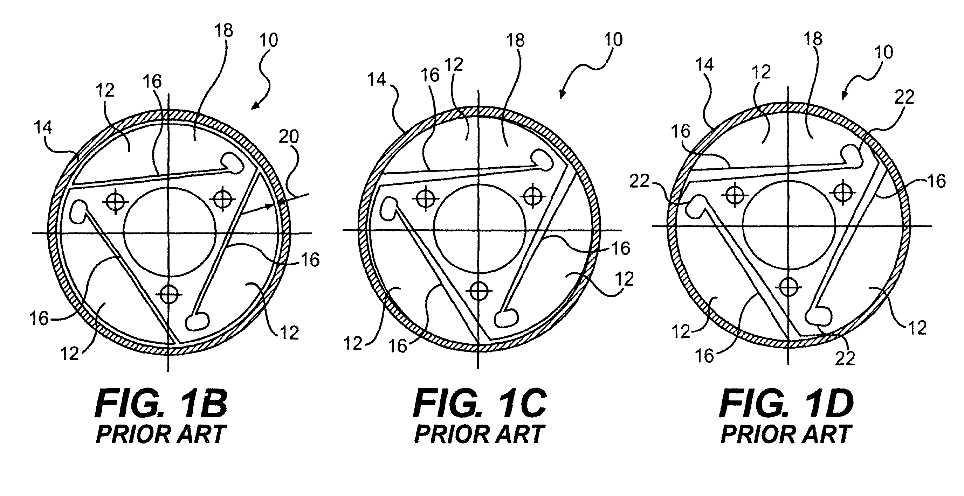

Figs. 1B to 1D illustrate a centrifugal clutch 10 having centrifugal weights 12 disposed in a clutch drum 14. The centrifugal weights 12 are defined by cuts 16 made in a disk 18. Centrifugal clutches with integral centrifugal weights, such as the clutch 10, are generally lighter and include less parts, reducing manufacturing and assembly costs as compared with the centrifugal clutches with separate centrifugal weights and springs. In centrifugal clutches with integral centrifugal weights, the elastic modulus of the material of the rotor and the shape of the connecting portions of the centrifugal weights act as the springs and the clearance between the centrifugal weights and the drum must be maintained sufficiently wide to allow the engine to reach high engine speeds (and therefore power) before the centrifugal weights clutch engage the drum. The slipping range in centrifugal clutches with integral centrifugal weights is therefore broader than for centrifugal clutches with separate centrifugal weights as the elastic modulus of the material of the rotor is not adjustable.

As can be seen in Fig. 1B, when the disk 18 is idle, a substantial clearance 20 exists between the centrifugal weights 12 and the clutch drum 14. At low speeds, as shown in Fig. 1C, the centrifugal weights 12 move towards the clutch drum 14 partially engaging it. Depending on the rotation speed (and the load on the clutch 10), the contact surface between the centrifugal weights 12 and the clutch drum 14 may be insufficient for the clutch drum 14 to rotate with the weights 12 (i.e. the clutch 10 is slipping). Therefore the centrifugal weights 12 rub against the inside of the clutch drum 14 which causes wear. At high speed, as shown in Fig. 1D, the centrifugal weights 12 fully engage the clutch drum 14, thus causing the clutch drum 14 to rotate with the centrifugal weights 12. However, due to the large displacement of the centrifugal weights 12, deformation of the disk 18 occurs at the points 22 where the centrifugal weights 12 connect with the remainder of the disk 18. This deformation causes stress at the points 22 that may lead to failure at these points 22.

For kart racing in particular, the slipping range of the centrifugal clutch is very important as the clutch is in the slipping mode frequently in slow corners or at the start of the race. A broad slipping range results in loss of engine power in heat, excessive clutch wear and less efficient acceleration exiting a corner. Furthermore, in kart racing, weight reduction is very important. A centrifugal clutch with integral centrifugal weights could reduce the overall weight of the kart and therefore improve the performance as long as the slipping range of the centrifugal clutch is adequate.

Economically and for weight reduction, it would be desirable to have a centrifugal clutch with integral centrifugal weights having a short slipping range.

Thus, there is a need for a centrifugal clutch with integral centrifugal weights having a short slipping range similar to the slipping range of a centrifugal clutch with separate centrifugal weights.

There is also a need for a method of making such a centrifugal clutch.

### SUMMARY OF THE INVENTION

It is an object of the present invention to ameliorate at least some of the inconveniences present in the prior art.

It is another object of the present invention to provide a centrifugal clutch having pre-tensioned centrifugal weights.

In one aspect, the invention provides a centrifugal clutch comprising: a clutch drum having an inner space; a monoblock inner rotor positioned within the inner space of the clutch drum; the monoblock inner rotor having a plurality of integral centrifugal weights defined by cuts in the monoblock inner rotor; each of the plurality of centrifugal weights being connected to a central portion of the monoblock inner rotor by a connecting bridge, the plurality of integral centrifugal weights being pre-tensioned by compression towards the central portion of the monoblock inner rotor.

In a further aspect, each of the plurality of integral centrifugal weights is defined by a single cut in the monoblock inner rotor.

In an additional aspect, each single cut is curvilinear, defines a contour of one integral centrifugal weight, and also defines the connecting bridge connecting the one integral centrifugal weight to the central portion of the monoblock inner rotor.

In a further aspect, the integral centrifugal weights are positioned at a distance of less than 0.5 mm from the clutch drum.

In an additional aspect, the centrifugal clutch has a slipping range of about 2,000 rpm.

In a further aspect, the monoblock inner rotor is made of steel.

In an additional aspect, the plurality of centrifugal weights includes at least three centrifugal weights.

Embodiments of the present invention each have at least one of the above-mentioned objects and/or aspects, but do not necessarily have all of them. It should be understood that some aspects of the present invention that have resulted from attempting to attain the above-mentioned objects may not satisfy these objects and/or may satisfy other objects not specifically recited herein.

Additional and/or alternative features, aspects, and advantages of embodiments of the present invention will become apparent from the following description, the accompanying drawings, and the appended claims.

### BRIEF DESCRIPTION OF THE DRAWINGS

For a better understanding of the present invention, as well as other aspects and further features thereof, reference is made to the following description which is to be used in conjunction with the accompanying drawings, where:
Figure 1A is a schematic plan view of a prior art centrifugal clutch with separate centrifugal weights and springs;
Figures 1B to 1D are schematic plan views of a prior art centrifugal clutch with integral weights at idle, low speed, and high speed respectively;
Figure 2 is a schematic plan view of a centrifugal clutch with integral weights in accordance with one embodiment of the invention;
Figure 3 is a schematic plan view of a first step in manufacturing the centrifugal clutch with integral weights shown in Figure 2;
Figure 4 is a schematic plan view of a second step in manufacturing the centrifugal clutch with integral weights shown in Figure 2;
Figure 5 is a schematic plan view of a third step in manufacturing the centrifugal clutch with integral weights shown in Figure 2;
Figure 6 is a graph illustrating the displacement of the centrifugal weights versus clutch rotation speed of the centrifugal weights of a monoblock rotor with integral weights shown in Figure 2 versus that of a conventional centrifugal clutch with integral weights;
Figure 7 is a graph illustrating the clutch engagement force in percentage versus clutch rotation speed of the centrifugal clutch with integral weights shown in Figure 2 versus that of a conventional centrifugal clutch with integral weights;
Figure 8 is a schematic plan view of a centrifugal clutch with integral weights in accordance with a second embodiment of the invention;
Figure 9 is a partial cross-sectional view of a clutch assembly including the centrifugal clutch of Figure 2; and
Figure 10 is a schematic illustration of an arrangement of the clutch assembly of Figure 9 in a vehicle.

### DETAILED DESCRIPTION OF THE PREFERRED EMBODIMENTS

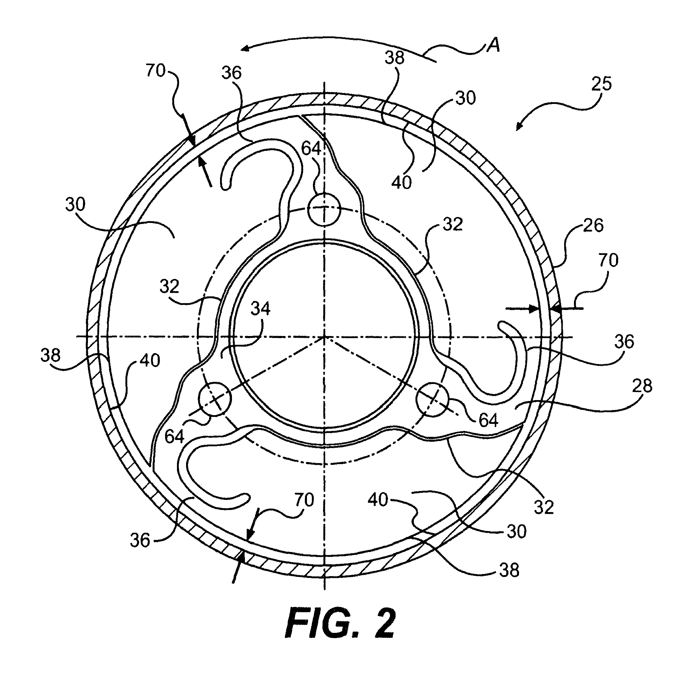

With reference to Fig. 2 showing the front view of a centrifugal clutch 25 in accordance with a first embodiment of the invention, the centrifugal clutch 25 includes a clutch drum 26 and a monoblock inner rotor 28 having three integral centrifugal weights 30 defined by cuts 32 practiced into the monoblock inner rotor 28. Although the monoblock inner rotor 28 is shown with three integral centrifugal weights 30, four or more integral centrifugal weights 30 are contemplated. A connecting bridge 36 having a specific cross-sectional area connects each integral centrifugal weight 30 to the central portion 34 of the monoblock rotor 28. The monoblock inner rotor 28 is positioned within the inner space of the clutch drum 26 and rotates in the direction of arrow A.

In operation, the monoblock rotor 28 is connected directly or indirectly to the crankshaft (not shown) of an engine and the clutch drum 26 is connected to a driven shaft (not shown). The monoblock rotor 28 is moved by rotation of the crankshaft. If the rotation speed of the crankshaft exceeds a pre-determined rotation speed, the integral centrifugal weights 30 are moved outwards by a slight bending of the connecting bridges 36 so that their outer surfaces 38 get frictionally engaged with the inner shell 40 of the clutch drum 26 such that the motion of rotation of the monoblock rotor 28 is transferred to the clutch drum 26 and to the driven shaft connected thereto.

The centrifugal clutch 25 and particularly its monoblock inner rotor 28 and integral centrifugal weights 30 have specific advantages which stem from the particular configuration of the monoblock inner rotor 28 and integral centrifugal weights 30 which results from the specific manufacturing process used to make the monoblock inner rotor 28 and integral centrifugal weights 30. The monoblock inner rotor 28 and integral centrifugal weights 30 are pre-tensioned during manufacturing such that the centrifugal weights 30 are biased towards the center of the monoblock rotor 28 which has the effect of increasing the centrifugal force (i.e. rotational speed) required to move the centrifugal weights 30 outward towards the inner shell 40 of the clutch drum 26.

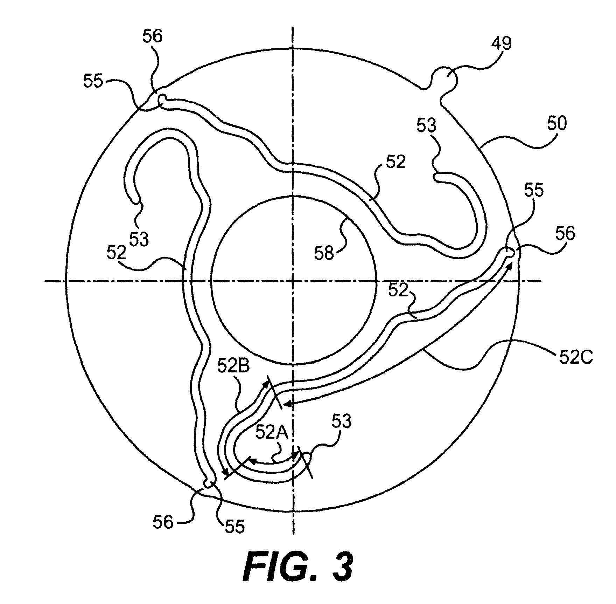

Figs. 3 to 5 illustrate the main steps in the manufacturing process of the monoblock rotor 28 with integral centrifugal weights 30.

Referring now to Fig. 3, a solid steel disc 50 having a diameter of approximately 85 mm and a thickness of 6-8 mm and a locating pin 49 is clamped on the table of a laser cutting machine. Laser cuts 52 are made from the immersion points 53 up to the end points 55 of the cuts 52 very close to the circumference of the steel disc 50 but leaving a thin band 56 of material of approximately 2 mm to maintain the integrity of the steel disc 50. Each laser cut 52 defines the inner contour of its respective centrifugal weight 30. The laser cuts are approximately 0.6 mm wide. The laser cuts 52 are identical and follow a precise pattern wherein the first segment 52A will define the thickness of the connecting bridge 36 (Fig. 1); the second segment 52B has a specific angle relative to the third segment 52C; the third segment 52C extends to the end point 55 following the contours of the central aperture 58 of the steel disc 50. The second and third segments 52B and 52C follow a curvilinear pattern that will help maintain the position the centrifugal weights 30 in use and will also provide stability for the second step of the manufacturing process.

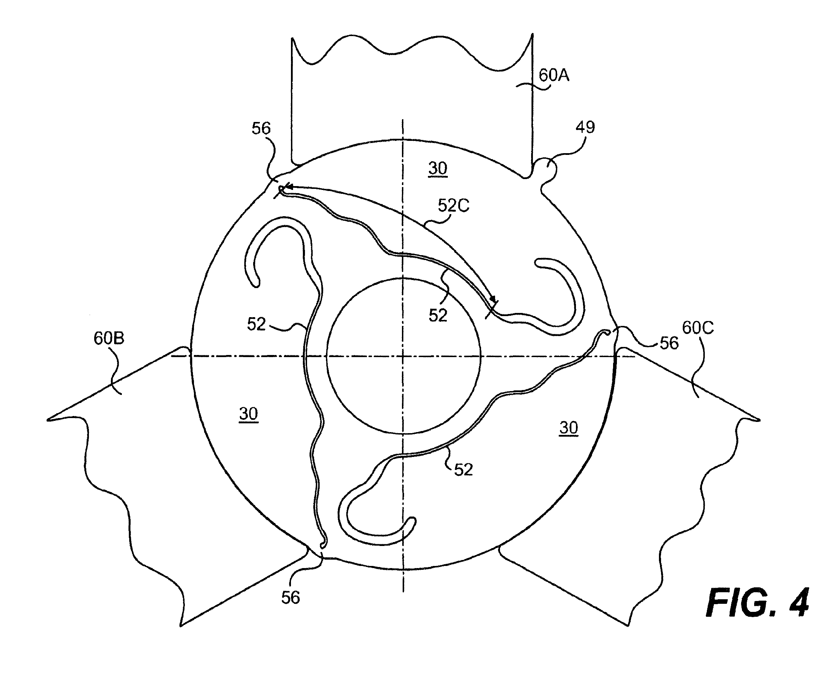

Referring now to Fig. 4, the previously cut steel disc 50 is transferred to a hydraulic press having three clamping jaws 60A, 60B and 60C. The previously cut steel disc 50 is positioned between the clamping jaws such that the locating pin 49 abuts against one of the jaws 60A, 60B and 60C in order to properly position the previously cut steel disc 50 such that the clamping jaws 60A, 60B and 60C are aligned to the third segments 52C of the laser cuts 52. The clamping jaws 60A, 60B and 60C then compress the previously cut steel disc 50, each with a pressure of approximately 60 bars (870 lb/in²) thereby collapsing and compressing the steel material above the third segments 52C of the laser cuts 52 into the laser cuts 52 as illustrated in Fig. 4 and bending the centrifugal weights 30 toward the center of the steel disc 50 resulting in permanent deformation of the steel material of the connecting bridges 36 and pre-tensioning of the centrifugal weights 30. The remaining thin band 56 helps stabilize the steel disc 50 during compression to avoid uncontrolled deformation. As well, the curvilinear pattern of the cuts 52 provides stability during compression as the steel material sinks into the recesses of the curvilinear pattern.

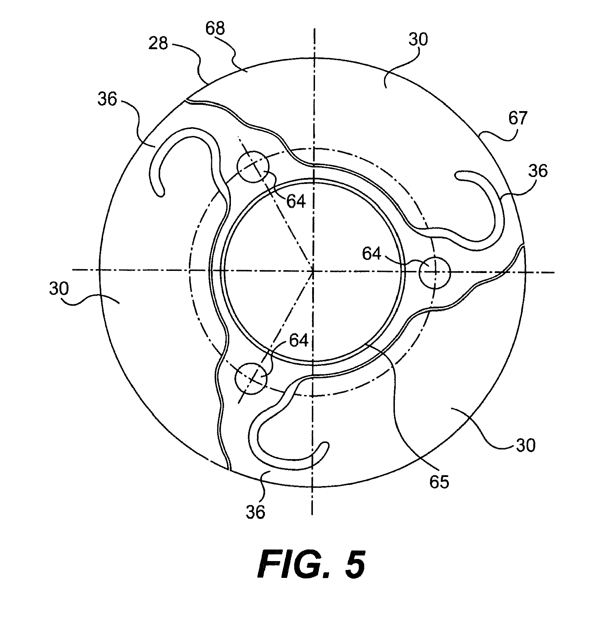

Referring now to Fig. 5, which is the final step of the manufacturing process of the monoblock rotor 28 with integral centrifugal weights 30, holes 64 are drilled in between the centrifugal weights 30 and the pre-tensioned monoblock rotor 28 (steel disc 50) is moved to a lathing machine. The circumference 67 of the pre-tensioned monoblock rotor 28 is lathed removing the thin band 56 (Fig. 4) and exposing the laser cuts 52 as the lathing is perform until the end points 55 of the laser cuts 52 are reached thereby creating the operational centrifugal weights 30 connected to the central portion 34 of the monoblock rotor 28 only by the connecting bridges 36 which confer the elastic property to the monoblock rotor 28 with integral centrifugal weights 30. The outer edges 68 of the monoblock rotor 28 are then burred to remove any sharp ridges that may remain after the lathing process that may impair the proper operation of the centrifugal clutch 25. The inner edge 65 is also burred to remove any sharp ridges.

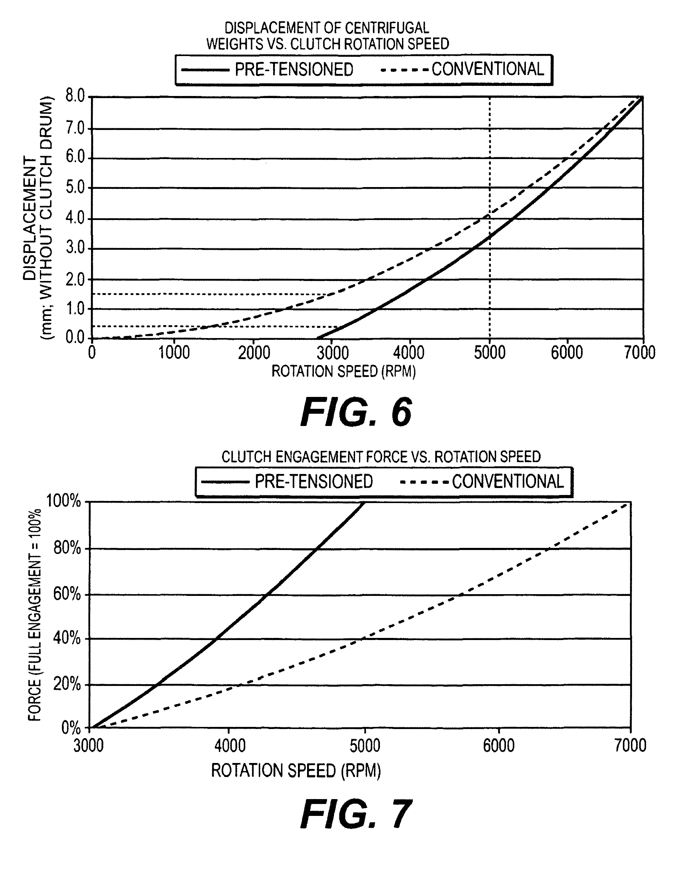

Referring now to Fig. 6, which is a comparative graph of the displacement of the centrifugal weights vs. the rotation speed of the clutch without a clutch drum of a conventional rotor with integral centrifugal weights (dotted line) and the pre-tensioned monoblock rotor 28 with integral centrifugal weights 30 (solid line), the centrifugal weights of a conventional rotor begin to expand outwardly at very low rpm and continue to expand gradually at a slow rate as the rpm increases. The pre-tensioned monoblock rotor 28 with integral centrifugal weights 30 on the other hand does not begin to expand until the monoblock rotor 28 reaches up to about 2,800 rpm. The pre-tensioning force accumulated in the monoblock rotor 28 in the second step of the manufacturing process maintains the centrifugal weights 30 within the diameter of the monoblock rotor 28 until the monoblock rotor 28 reaches up to about 2,800 rpm as shown by the curve in dotted lines. Thereafter, the displacement of the centrifugal weights 30 of the pre-tensioned monoblock rotor 28 is more rapid then a conventional rotor with integral centrifugal weights. Referring back to Fig. 2, the reduced displacement of the monoblock rotor 28 with integral centrifugal weights 30 at low rpm allows the clearance 70 between the centrifugal weights 30 and the clutch drum 26 to be reduced substantially. The clearance 70 between the centrifugal weights 30 and the clutch drum 26 can be reduced to less than 0.5. It is contemplated that the clearance 70 could be 0.3 mm.

Referring now to Fig. 7, which is a comparative graph of the clutch engagement force of the centrifugal weights to the clutch drum vs. the rotation speed of the clutch of a conventional rotor with integral centrifugal weights (dotted line) and of the pre-tensioned monoblock rotor 28 with integral centrifugal weights 30 (solid line), the pre-tensioned monoblock rotor 28 with integral centrifugal weights 30 reaches 100% engagement to the clutch drum 26 through a smaller range of rotational speed. The clutch engagement starts at approximately 3,000 rpm and reaches full engagement at approximately 5,000 rpm. The pre-tensioned monoblock rotor 28 with integral centrifugal weights 30 displays a slipping range of about 2,000 rpm . On the other hand, the conventional rotor with integral centrifugal weights (dotted line) starts engaging the clutch drum at 3,000 rpm but reaches full engagement at approximately 7,000 rpm. The slipping range of conventional rotor with integral centrifugal weights is therefore 4,000 rpm.

The engagement behavior of the pre-tensioned monoblock rotor 28 with integral centrifugal weights 30 is therefore vastly improved over conventional centrifugal clutch with integral centrifugal weights as its slipping range is half the slipping range of conventional centrifugal clutches. As shown in Figs 6 and 7, there is no clutch drag below 3,000 rpm and there is rapid full engagement of the clutch thereafter.

In a racing kart, the shorter slipping range translates into improved acceleration of the racing kart at the start of a race and exiting corners as the power of the engine is fully transmitted to the wheels within a short rpm band of 2,000 rpm as opposed to 4,000 rpm in conventional centrifugal clutches. There is therefore less engine power loss through the slipping range and therefore improved performance on the racetrack. There is also the advantage of less clutch wear and more durability because of the shorter slipping range since the clutch 25 is slipping much less than conventional centrifugal clutches and is not dragging at low rpm. Furthermore, because of the narrow clearance 70 (Fig. 2) and the rapid full engagement, the connecting bridges 36 are less likely to break as the centrifugal weights 30 are almost constantly supported by the clutch drum 26.

In conventional centrifugal clutches, friction pads are often added to the circumference of the centrifugal weights in order to shorten the slipping range. Although, friction pads could be added to the circumference of the centrifugal weights 30 of the pre-tensioned monoblock rotor 28, the slipping range is already short enough that friction pads are not necessary.

Economically, the pre-tensioned monoblock rotor 28 with integral centrifugal weights 30 has the advantage that it can be made of steel as opposed to more expensive alloys for conventional centrifugal clutches. The clutch drum 26 can be made of steel as well or lightweight aluminium to reduce weight for racing application.

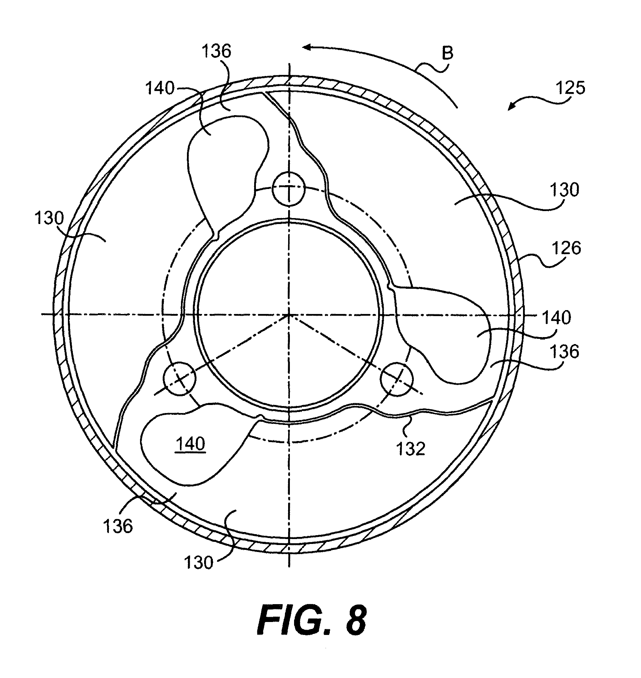

Referring now to Fig. 8, there is shown a lightweight centrifugal clutch 125 in accordance with a second embodiment of the invention. The centrifugal clutch 125 includes a clutch drum 126 and a monoblock inner rotor 128 having three integral centrifugal weights 130 defined by cuts 132 practiced into the monoblock inner rotor 128. A connecting bridge 136 having a specific cross-sectional area connects each integral centrifugal weight 130 to the central portion 134 of the monoblock rotor 128. The monoblock inner rotor 128 is positioned within the inner space of the clutch drum 126 and rotates in the direction of arrow B. The centrifugal weights 130 include cut-out sections 140 where further material (steel) has been removed in order to lighten the monoblock inner rotor 128.

The manufacturing process is identical to the manufacturing process previously described, except that the initial laser cut also removes the cut-out sections 140 from the disk 50 (Fig. 3).

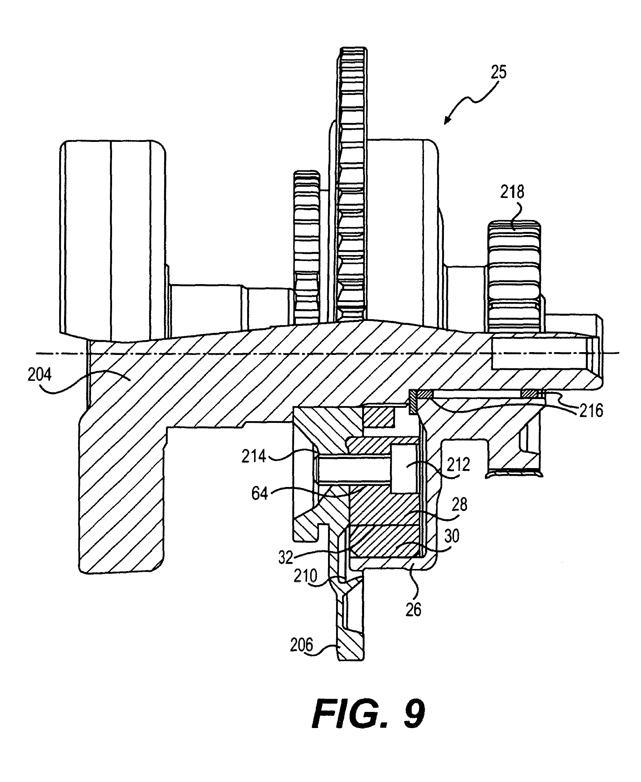

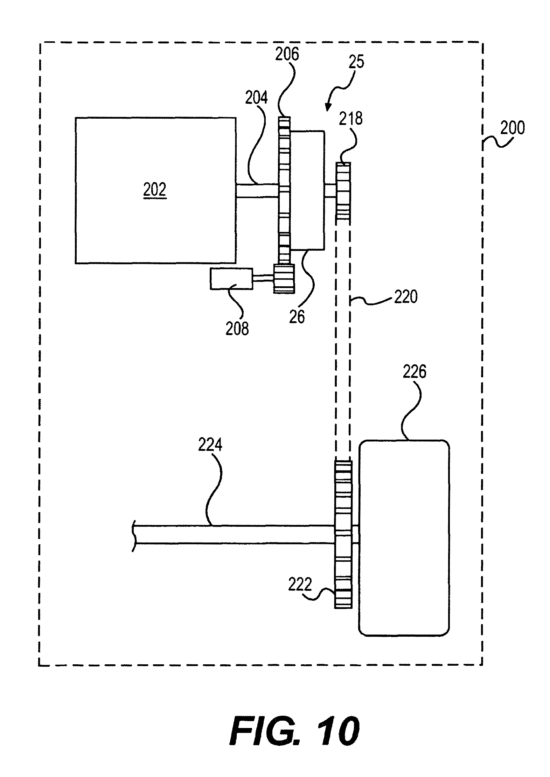

Turning now to Figs. 9 and 10, one possible embodiment of an arrangement of the centrifugal clutch 25 in a vehicle 200, such as a kart, will be described. It should be understood that other arrangements are contemplated. It is also contemplated that other clutches made according to the present invention, such as clutch 125, could be used in this or other arrangements.

As seen in Fig. 10, the vehicle 200 is powered by an engine 202. The engine 202 has a crankshaft 204 disposed therein for rotation as a result of the movement of the cylinders (not shown) in the engine 202. A portion of the crankshaft 204 extends from the engine 202. It is contemplated that the crankshaft 204 could be completely in the engine 202 and that a separate shaft, such as an output shaft, driven by the crankshaft 204 would extend from the engine 202. As best seen in Fig. 9, a starter gear 206 is fixedly mounted on the crankshaft 204 for rotation therewith. A starter motor 208 engages the starter gear 206 to permit starting of the engine 202 when it is stopped, as would be understood by those skilled in the art of internal combustion engines. The starter gear 206 is provided with an inner groove 210, the function of which will be described below.

As seen in Fig. 9, the centrifugal clutch 25 is disposed on the crankshaft 204. The inner rotor 28 is fastened to the starter gear 206 via bolts 212 inserted in the holes 64 of the inner rotor 28 and corresponding holes 214 in the starter gear 206. The inner rotor 28 is therefore fixedly mounted relative to the crankshaft 204 and as a results rotates with the crankshaft 204. The clutch drum 26 is disposed over the inner rotor 28 and is supported on the crankshaft 204 by needle bearings 216. Since the clutch drum 26 is mounted on bearings 216, the inner rotor 28 and the clutch drum 26 can rotate independently of each other when the centrifugal weights 30 do not engage the clutch drum 26.

Although the construction of the centrifugal clutch 25 reduces wear, some wear will nonetheless occurs. As the clutch 25 wears, small metal filings are created. As the clutch 25 rotates these filings gather inside the groove 210 of the starter gear 206 thus preventing them from interfering with the proper operation of other parts of the vehicle 200.

A sprocket 218 is integrally formed with the clutch drum 26. It is contemplated that the sprocket 218 could be a separate part connected to the clutch drum 26. As seen in Fig. 10, the sprocket 218 is operatively connected via a chain 220 to another sprocket 222. The sprocket 222 is disposed on a wheel axle 224 of the vehicle to which two wheels 226 are connected (one at each end, only one of which is shown). When the engine 202 reaches a speed where the centrifugal weights 30 engage the clutch drum 26, power from the engine 202 is transferred to the wheels 226 via the sprocket 218, the chain 220, and the sprocket 222.

Modifications and improvements to the above-described embodiments of the present invention may become apparent to those skilled in the art. The foregoing description is intended to be exemplary rather than limiting. The scope of the present invention is therefore intended to be limited solely by the scope of the appended claims.

## Claims

1. A centrifugal clutch comprising:
a clutch drum having an inner space;
a monoblock inner rotor positioned within the inner space of the clutch drum;
the monoblock inner rotor having a plurality of integral centrifugal weights defined by cuts in the monoblock inner rotor, each of the plurality of centrifugal weights being connected to a central portion of the monoblock inner rotor by a connecting bridge,
**characterized in that**,
the plurality of integral centrifugal weights being pre-tensioned by compression towards the central portion of the monoblock inner rotor.

2. The centrifugal clutch of claim 1, wherein each of the plurality of integral centrifugal weights is defined by a single cut in the monoblock inner rotor.

3. The centrifugal clutch of claim 2, wherein each single cut is curvilinear, defines a contour of one integral centrifugal weight, and defines the connecting bridge connecting the one integral centrifugal weight to the central portion of the monoblock inner rotor.

4. The centrifugal clutch of claim 1, wherein the integral centrifugal weights are positioned at a distance of less than 0.5 mm from the clutch drum.

5. The centrifugal clutch of claim 4, wherein the centrifugal clutch has a slipping range of about 2,000 rpm.

6. The centrifugal clutch of claim 1, wherein the monoblock inner rotor is made of ordinary steel.

7. The centrifugal clutch of claim 1, wherein the plurality of centrifugal weights includes at least three centrifugal weights.

## Patentansprüche

1. Zentrifugalkupplung, umfassend:
eine Kupplungstrommel mit einem Innenraum;
einen Einzelblockinnenrotor, der in dem Innenraum der Kupplungstrommel angeordnet ist;
wobei der Einzelblockinnenrotor eine Mehrzahl einstückiger Zentrifugalgewichte aufweist, die durch Schnitte in den Einzelblockinnenrotor definiert sind, wobei jedes der Mehrzahl von Zentrifugalgewichten über einen Verbindungsbrücke mit einem Mittelabschnitt des Einzelblockinnenrotors verbunden sind,
**dadurch gekennzeichnet, dass**
die Mehrzahl einstückiger Zentrifugalgewichte durch Zusammendrücken zum Mittelabschnitt des Einzelblockinnenrotors hin vorgespannt ist.

2. Zentrifugalkupplung nach Anspruch 1, wobei jedes der Mehrzahl einstückiger Zentrifugalgewichte durch einen einzelnen Schnitt im Einzelblockinnenrotor definiert ist.

3. Zentrifugalkupplung nach Anspruch 2, wobei jeder einzelne Schnitt kurvenförmig ist, einen Umriss von einem einstückigen Zentrifugalgewicht definiert und die Verbindungsbrücke definiert, die das eine einstückige Zentrifugalgewicht mit dem Mittelabschnitt des Einzelblockinnenrotors verbindet.

4. Zentrifugalkupplung nach Anspruch 1, wobei die einstückigen Zentrifugalgewichte in einem Abstand von weniger als 0,5 mm von der Kupplungstrommel entfernt angeordnet sind.

5. Zentrifugalkupplung nach Anspruch 4, wobei die Zentrifugalkupplung einen Schlupfbereich von etwa 2.000 U/min aufweist.

6. Zentrifugalkupplung nach Anspruch 1, wobei der Einzelblockinnenrotor aus Massenstahl hergestellt ist.

7. Zentrifugalkupplung nach Anspruch 1, wobei die Mehrzahl von Zentrifugalgewichten wenigstens drei Zentrifugalgewichte einschließt.

## Revendications

1. Embrayage centrifuge comprenant :
un tambour d'embrayage comportant un espace intérieur ;
un rotor interne monobloc positionné à l'intérieur de l'espace intérieur du tambour d'embrayage ;
le rotor interne monobloc comportant une pluralité de poids centrifuges intégrés définie par des coupes dans le rotor interne monobloc, chacun des poids centrifuges de la pluralité de poids centrifuges étant relié à une partie centrale du rotor interne monobloc par un pont de raccordement, **caractérisé en ce que** la pluralité de poids centrifuges intégrés subit une pré-tension par compression vers la partie centrale du rotor interne monobloc.

2. Embrayage centrifuge selon la revendication 1, dans lequel chacun des poids centrifuges de la pluralité de poids centrifuges est défini par une coupe simple dans le rotor interne monobloc.

3. Embrayage centrifuge selon la revendication 2, dans lequel chaque coupe simple est curviligne, définit un contour d'un poids centrifuge intégré et définit le pont de raccordement reliant le poids centrifuge intégré à la partie centrale du rotor interne monobloc.

4. Embrayage centrifuge selon la revendication 1, dans lequel les poids centrifuges intégrés sont positionnés à une distance inférieure à 0,5 mm à partir du tambour d'embrayage.

5. Embrayage centrifuge selon la revendication 4, dans lequel l'embrayage centrifuge a une plage de glissement d'environ 2 000 tours par minute.

6. Embrayage centrifuge selon la revendication 1, dans lequel le rotor interne monobloc est fait d'acier ordinaire.

7. Embrayage centrifuge selon la revendication 1, dans lequel la pluralité de poids centrifuges comprend au moins trois poids centrifuges.
